# EUROPÄISCHE PATENTSCHRIFT

(11) **EP 3 705 769 B1**
(45) Veröffentlichungstag und Bekanntmachung des Hinweises auf die Patenterteilung: **26.05.2021**
(21) Anmeldenummer: 20157234.4
(22) Anmeldetag: 13.02.2020
(51) Int. Cl.: F16L 39/00, F16L 59/14, F16L 59/18, F23J 13/02

(54) **VERBINDUNGSROHR, VERFAHREN ZUR HERSTELLUNG EINES VERBINDUNGSROHRS**
CONNECTING TUBE, METHOD OF MANUFACTURING A CONNECTING TUBE
TUYAU DE RACCORDEMENT, PROCÉDÉ DE FABRICATION D'UN TUYAU DE RACCORDEMENT

(30) Priorität: 08.03.2019 DE 102019106028
(43) Veröffentlichungstag der Anmeldung: 09.09.2020
(73) Patentinhaber: Color emajl d.o.o., 34000 Pozega (HR)
(72) Erfinder: Guncevic, Davor, 34000 Pozega (HR)
(74) Vertreter: Macliing, Trixia

(56) Entgegenhaltungen:
- EP-A2- 0 148 717
- DE-A1-102008 005 655
- GB-A- 1 337 394

## Beschreibung

### Technisches Gebiet

Die Erfindung betrifft ein Verbindungsrohr für eine Verbindungsleitung zur Durchleitung von Rauch von einer Feuerstätte in einen Schornstein, wobei das Verbindungsrohr ein koaxial zu einer Längsachse angeordnetes Außenrohr, ein koaxial zu der Längsachse in dem Außenrohr mit einem Abstand radial zur Längsachse von dem Außenrohr angeordnetes Innenrohr zur Durchleitung des Rauchs und ein zwischen dem Innenrohr und dem Außenrohr angeordnetes Isoliermittel zur mechanischen Verbindung des Innenrohrs mit dem Außenrohr und thermischen Isolierung des Innenrohrs von dem Außenrohr umfasst, wobei in einem männlichen Endabschnitt des Verbindungsrohrs entlang der Längsachse kein Isoliermittel angeordnet ist, und wobei das Verbindungsrohr einen dem männlichen Endabschnitt entlang der Längsachse gegenüberliegenden weiblichen Endabschnitt zur Aufnahme des männlichen Endabschnitts eines gleichartigen Verbindungsrohrs zur rauchdichten Verbindung der beiden Verbindungsrohre umfasst.

Die Erfindung betrifft außerdem ein Verfahren zur Herstellung eines Verbindungsrohrs.

### Stand der Technik

Aus dem Stand der Technik, beispielsweise aus den Druckschriften GB1337394, DE102008005655A1, DE202008000811U1 und EP0443222A1, sind doppelwandige Verbindungsrohre eingangs genannter Art und Verfahren zu deren Herstellung bekannt. Die Druckschrift DE4239476A1 beschreibt ein doppelwandiges Verbindungsrohr zur Durchleitung von Rauch in einen Schornstein, mit einem zwischen einem Innenrohr und einem Außenrohr angeordneten Isoliermittel.

Nachteilig an bekannten Verbindungsrohren ist, dass ein großer Zwischenraum zwischen Innenrohr und Außenrohr notwendig ist, um eine ausreichende Wärmeisolierung zu gewährleisten, wodurch die Verbindungsrohre einen großen Außendurchmesser haben und einen großen Bauraum beanspruchen. Ferner ist eine Montage der Verbindungsleitung durch Ineinanderstecken mehrerer Verbindungsrohre häufig dadurch erschwert, dass die Innenrohre in den Außenrohren nicht optimal zentriert sind, sodass sie bei der Montage verkanten, oder ein Versatz zwischen den Verbindungsrohren entsteht.

### Technische Aufgabe

Die Aufgabe der Erfindung ist es, ein kosteneffizientes Verbindungsrohr zu schaffen, das eine hohe Wärmedämmung bietet, geringen Bauraum beansprucht und schnell und einfach zu einer Verbindungsleitung zu montieren ist. Eine weitere Aufgabe der Erfindung ist es, ein kosteneffizientes Herstellungsverfahren für ein solches Verbindungsrohr zu schaffen.

### Technische Lösung

Der Gegenstand der vorliegenden Erfindung stellt ein Verbindungsrohr gemäß Anspruch 1 bereit, das die technische Aufgabe löst. Ebenso wird die Aufgabe durch ein Verfahren gemäß Anspruch 14 gelöst. Vorteilhafte Ausgestaltungen ergeben sich aus den abhängigen Ansprüchen.

### Beschreibung der Ausführungsarten

Ein erfindungsgemäßes Verbindungsrohr für eine Verbindungsleitung zur Durchleitung von Rauch von einer Feuerstätte in einen Schornstein umfasst zumindest ein koaxial zu einer Längsachse angeordnetes Außenrohr, ein koaxial zu der Längsachse in dem Außenrohr mit einem Abstand radial zur Längsachse von dem Außenrohr angeordnetes Innenrohr zur Durchleitung des Rauchs und ein zwischen dem Innenrohr und dem Außenrohr angeordnetes Isoliermittel zur mechanischen Verbindung des Innenrohrs mit dem Außenrohr und thermischen Isolierung des Innenrohrs von dem Außenrohr.

Das Außenrohr und das Innenrohr haben im einfachsten Fall jeweils eine kreisförmige Querschnittsfläche. Beispielsweise zur besseren Ausnutzung eines gegebenen Bauraums sind auch anders geformte Querschnittsflächen möglich. Das Außenrohr und das Innenrohr können gerade, gekrümmt oder geknickt sein, um den vorgesehenen Verlauf der Verbindungsleitung herstellen zu können.

Bei der Feuerstätte kann es sich um eine Einzelfeuerstätte, insbesondere um einen Kaminofen handeln.

In einem männlichen Endabschnitt des Verbindungsrohrs entlang der Längsachse ist kein Isoliermittel angeordnet, und das Verbindungsrohr umfasst einen dem männlichen Endabschnitt entlang der Längsachse gegenüberliegenden weiblichen Endabschnitt zur Aufnahme des männlichen Endabschnitts eines gleichartigen Verbindungsrohrs zur rauchdichten Verbindung der beiden Verbindungsrohre. Dadurch, dass der männliche Endabschnitt kein Isoliermaterial enthält, kann er in den weiblichen Endabschnitt eines benachbarten Verbindungsrohrs eingesteckt werden, ohne dabei von dem Isoliermaterial behindert zu werden oder das Isoliermaterial zu beschädigen, um eine rauchdichte Verbindungsleitung mit durchgängiger Wärmedämmung zu bilden.

Ein Außendurchmesser des Innenrohrs ist in dem männlichen Endabschnitt kleiner oder gleich einem Innendurchmesser des Innenrohrs in dem weiblichen Endabschnitt. Ein Außendurchmesser des Außenrohrs ist in dem männlichen Endabschnitt kleiner oder gleich einem Innendurchmesser des Außenrohrs in dem weiblichen Endabschnitt. Wenn der Außendurchmesser gleich dem gegenüberliegenden Innendurchmesser des gleichen Rohrs ist, ergibt sich daraus eine passgenaue und somit rauchdichte Verbindung der Endabschnitte, wenn der männliche in den weiblichen Endabschnitt eingeführt wird. Dazu kann das Innenrohr und/oder das Außenrohr beispielsweise in dem männlichen Endabschnitt verjüngt und/oder in dem weiblichen Endabschnitt erweitert ausgestaltet sein. Wenn der Außendurchmesser zumindest geringfügig kleiner als der entsprechende Innendurchmesser ist, wird das Einführen dadurch vereinfacht.

Vorzugsweise sind das Innenrohr und das Außenrohr in dem männlichen Endabschnitt verjüngt ausgestaltet. Dadurch kann das Verbindungsrohr an dem weiblichen Endabschnitt auf eine beliebige Länge abgeschnitten werden, ohne dadurch die Funktion des weiblichen Endabschnitts beim Zusammenstecken mit einem weiteren Verbindungsrohr zu beeinträchtigen.

Das Außenrohr kann an dem weiblichen Endabschnitt entlang der Längsachse einen Überstand über das Isoliermaterial und/oder das Innenrohr bilden. Dieser Überstand kann beim Zusammenstecken mehrerer Verbindungsrohre als Führungshilfe zum Einführen des männlichen Endabschnitts in den weiblichen Endabschnitt dienen und somit die Montage vereinfachen.

Die Verbindungsleitung umfasst vorzugsweise zumindest ein zwischen dem Innenrohr und dem Außenrohr und an dem Innenrohr oder an dem Außenrohr angebrachtes Verstärkungsmittel zur Verstärkung des Innenrohrs oder des Außenrohrs radial zur Längsachse. Durch das Verstärkungsmittel wird das Innenrohr und/oder das Außenrohr in mechanisch besonders beanspruchten Bereichen, beispielsweise in den Endabschnitten, die beim Zusammenstecken einer erhöhten radialen Belastung ausgesetzt sind, mechanisch verstärkt. Dadurch kann das Innenrohr oder das Außenrohr in einer für die Stabilität außerhalb der besonders belasteten Bereiche ausreichenden, verringerten Materialstärke ausgeführt werden, um Materialkosten zu verringern und Bauraum und Gewicht zu sparen.

Die Anordnung des Verstärkungsmittels zwischen dem Innenrohr und dem Außenrohr hat die Vorteile, dass sich daraus eine Verbindungsleitung mit einer versatzfreien Außenfläche ergibt, die wenig Bauraum beansprucht, leicht zu reinigen ist und optisch ansprechend aussieht.

Das Isoliermittel ist vorzugsweise zwischen dem Verstärkungsmittel und dem Außenrohr oder dem Innenrohr zur mechanischen Fixierung von Isoliermaterial, Innenrohr und Außenrohr aneinander verpresst. Durch das Verpressen des Isoliermaterials wird ein Verrutschen von Isoliermaterial, Innenrohr und Außenrohr gegeneinander entlang der Längsachse verhindert, ohne dass dadurch eine Wärmebrücke zwischen dem inneren Rohr und dem Außenrohr entsteht. Ferner wird das Innenrohr in dem Außenrohr durch das Verpressen zentriert.

Das Verpressen hat weiterhin den Vorteil, dass das Isoliermaterial, das Innenrohr und das Außenrohr ohne zusätzliche Befestigungsmittel und somit besonders kosteneffizient, materialsparend und gewichtssparend aneinander fixiert werden können.

Das Verstärkungsmittel ist vorzugsweise an dem Außenrohr angebracht, wobei das Isoliermittel zwischen dem Verstärkungsmittel und dem Innenrohr zur mechanischen Fixierung von Isoliermaterial, Innenrohr und Außenrohr aneinander verpresst ist. Da das Außenrohr einen größeren Durchmesser hat als das Innenrohr, kann bei einer Anbringung an dem Außenrohr mit einer gegebenen Dicke des Verstärkungsmittels radial zur Längsachse eine höhere mechanische Verstärkung und eine stärkere Fixierung erreicht werden als bei einer Anbringung an dem Innenrohr. Somit können die Verstärkung und Fixierung verbessert und/oder der von dem Verbindungsrohr beanspruchte Bauraum reduziert werden.

Das zumindest eine Verstärkungsmittel ist vorzugsweise in dem weiblichen Endabschnitt angeordnet und/oder an den männlichen Endabschnitt angrenzend angeordnet. Beim Ineinanderstecken mehrerer Verbindungsrohre treten die höchsten radialen Belastungen im weiblichen Endabschnitt, in den der männliche Endabschnitts eingeführt wird, auf. Daher ist eine Anordnung des Verstärkungsmittels in dem weiblichen Endabschnitt besonders vorteilhaft.

Durch ein an den männlichen Endabschnitt angrenzendes Verstärkungsmittel wird eine Zentrierung des Innenrohrs in dem männlichen Endabschnitt erreicht, sodass der männliche Endabschnitt ohne zu verkannten, und ohne dass ein Versatz zwischen den Außenrohren der zusammengesteckten Verbindungsrohre entsteht, in den weiblichen Endabschnitt des benachbarten Verbindungsrohrs eingeführt werden kann.

Ein an den männlichen Endabschnitt angrenzendes Verstärkungsmittel hat den besonderen Vorteil, dass das Verbindungsrohr an seinem weiblichen Endabschnitt auf eine beliebige Länge des Verbindungsrohrs abgeschnitten werden kann, ohne dass dadurch die Verstärkungs- und Fixierungswirkung des Verstärkungsmittels verloren geht. Dadurch können Produktionskosten und Lagerkosten erheblich reduziert werden, da das Verbindungsrohr nur in einer einheitlichen Länge produziert und gelagert werden muss und je nach Anforderungen am Einbauort, beispielsweise mit einer Kreissäge, auf die passende Länge zugeschnitten werden kann.

In einer besonders vorteilhaften Ausgestaltung umfasst das Verbindungsrohr in dem weiblichen Endabschnitt und an den männlichen Endabschnitt angrenzend jeweils ein Verstärkungsmittel. Dadurch wird eine besonders genaue Zentrierung des Innenrohres in dem Außenrohr erreicht.

Das zumindest eine Verstärkungsmittel ist vorzugsweise um die Längsachse umlaufend, bevorzugt ringförmig oder hohlzylinderförmig, und koaxial zu der Längsachse angeordnet ist. Durch eine umlaufende Ausgestaltung des Verstärkungsmittels wird eine gleichmäßige und somit besonders zuverlässige Verstärkung und Zentrierung erreicht. Eine Querschnittsfläche des Verstärkungsmittels quer zur Längsachse ist vorzugsweise an die Querschnittsfläche des Innenrohres und/oder des Außenrohrs angepasst, um einfach daran angebracht werden zu können. Bei einem Innenrohr und/oder Außenrohr mit kreisförmiger Querschnittsfläche ist das Verstärkungsmittel also beispielsweise ringförmig oder hohlzylinderkörnig.

Beispielsweise um Material zu sparen, kann das Verstärkungsmittel Durchbrechungen, insbesondere radial zur Längsachse, umfassen und insbesondere als Gitter ausgestaltet sein.

Das zumindest eine Verstärkungsmittel ist vorzugsweise an dem Innenrohr oder an dem Außenrohr stoffschlüssig befestigt, bevorzugt damit verschweißt. Eine stoffschlüssige Verbindung hat den Vorteil einer besonders zuverlässigen Befestigung bei geringem Bauraum.

Das zumindest eine Verstärkungsmittel ist vorzugsweise an dem Innenrohr oder an dem Außenrohr kraftschlüssig befestigt, bevorzugt damit verklemmt. Eine kraftschlüssige Verbindung hat den Vorteil, dass sie besonders einfach und kostengünstig herzustellen ist.

Das zumindest eine Verstärkungsmittel hat vorzugsweise entlang der Längsachse eine Verstärkungsmittellänge, wobei die Verstärkungsmittellänge 50 % bis 200 %, bevorzugt 60 % bis 160 %, einer Endabschnittslänge des männlichen Endabschnitts entlang der Längsachse beträgt. Durch eine derart gewählte Verstärkungsmittellänge kann das Innenrohr und/oder das Außenrohr in dem gesamten weiblichen Endabschnitt, in den der männliche Endabschnitt eingeführt wird, verstärkt werden. Die Verstärkungsmittellänge beträgt beispielsweise 10 mm bis 100 mm, bevorzugt von 30 mm bis 80 mm.

Das zumindest eine Verstärkungsmittel hat vorzugsweise radial zur Längsachse eine Verstärkungsmitteldicke, wobei die Verstärkungsmitteldicke 1 % bis 20 %, bevorzugt 5 % bis 15 %, des Abstands zwischen dem Innenrohr und dem Außenrohr beträgt. Durch eine derart gewählte Verstärkungsmitteldicke kann mit üblichen Materialien eine ausreichende mechanische Verstärkung und Fixierung erreicht werden, ohne dass die thermische Dämmwirkung des Isoliermaterials beeinträchtigt wird. Die Verstärkungsmitteldicke beträgt beispielsweise 0,2 mm bis 2 mm, bevorzugt 0,5 mm bis 1 mm.

Der Abstand zwischen dem Innenrohr und dem Außenrohr ist vorzugsweise über eine gesamte Außenrohrlänge entlang der Längsachse konstant, wodurch die Entstehung von Wärmebrücken in Bereichen mit einem verringerten Abstand verhindert wird. Der Abstand zwischen dem Innenrohr und dem Außenrohr beträgt beispielsweise 5 mm bis 9 mm, bevorzugt 7 mm bis 9 mm. Es hat sich überraschend herausgestellt, dass mit einem erfindungsgemäßen Verbindungsrohr auch mit einem solchen Abstand, der geringer ist als bei üblichen Verbindungsrohren, eine ausreichende Wärmedämmung erzielt wird.

Ein Zwischenraum zwischen dem Innenrohr und dem Außenrohr ist außerhalb des männlichen Endabschnitts vorzugsweise von dem Isoliermaterial ausgefüllt. Dadurch wird einerseits eine stabile Fixierung von Innenrohr, Außenrohr und Isoliermaterial aneinander gewährleistet und andererseits eine gleichmäßige und hohe Wärmedämmung erzielt.

Das Isoliermaterial ist zumindest radial zur Längsachse um 1 % bis 20 %, bevorzugt 5 % bis 15 %, kompressibel, feuerfest und/oder gemeinsam mit dem Außenrohr und dem Innenrohr schneidbar und umfasst bevorzugt zumindest eine keramische Faser, besonders bevorzugt ein Keramikpapier. Dadurch, dass das Isoliermaterial kompressibel ist, wird sichergestellt, dass es bei einem Verpressen zwischen dem Verstärkungsmittel und dem Außenrohr oder dem Innenrohr nicht beschädigt wird.

Wenn das Isoliermaterial gemeinsam mit dem Außenrohr und dem Innenrohr schneidbar ist, kann das Verbindungsrohr auf einfache Weise, beispielsweise mit einer Kreissäge, auf eine passende Länge zugeschnitten werden.

Keramische Fasern, insbesondere ein Keramikpapier, bieten eine hohe Wärmedämmung und Temperaturbeständigkeit und sind feuerfest und beispielsweise mit einer Kreissäge gemeinsam mit einem Innenrohr und einem Außenrohr aus Metall schneidbar. So kann ein erfindungsgemäßes Verbindungsrohr beispielsweise aufgrund seiner hohen Wärmedämmung mit einem geringeren Abstand von beispielsweise 24 cm zu brennbaren Materialien montiert werden als fachübliche Verbindungsrohre.

Vorzugsweise ist das Isoliermaterial einstückig ausgebildet, sodass auch bei einer Fixierung des Isoliermaterials nur im Bereich des zumindest einen Verstärkungsmittels das gesamte Isoliermaterial fixiert ist. Dadurch wird insbesondere verhindert, dass bei einem Abschneiden eines Endes des Verbindungsrohrs zur Anpassung von dessen Länge Isoliermaterial aus dem Verbindungsrohr herausfällt, wie es bei fachüblichem granularem Isoliermaterial der Fall ist.

Das Innenrohr und/oder das Außenrohr weist vorzugsweise radial zur Längsachse eine Materialstärke von 0,5 mm bis 5 mm, bevorzugt von 1 mm bis 3 mm, auf. Mit einer solchen Materialstärke kann mit üblichen Materialien mit geringem Bauraum eine ausreichend hohe mechanische Stabilität des Verbindungsrohrs sichergestellt werden.

Das Innenrohr, das Außenrohr und/oder das Verstärkungsmittel umfassen vorzugsweise ein Metall, bevorzugt einen Stahl, besonders bevorzugt einen Edelstahl, und können insbesondere vollständig daraus bestehen. Für eine einfache und kostengünstige Herstellung bestehen das Innenrohr, das Außenrohr und das Verstärkungsmittel vorzugsweise aus dem gleichen Material.

Ein erfindungsgemäßes Verfahren ist zur Herstellung eines Verbindungsrohrs, insbesondere eines erfindungsgemäßen Verbindungsrohres, für eine Verbindungsleitung zur Durchleitung von Rauch von einer Feuerstätte in einen Schornstein ausgelegt.

Das Verfahren umfasst ein Anbringen zumindest eines Verstärkungsmittels an einer Außenseite eines Innenrohrs oder an einer Innenseite eines Außenrohrs für das Verbindungsrohr.

Das Verfahren umfasst ein Aufbringen eines thermischen Isoliermaterials an der Außenseite des Innenrohrs oder an der Innenseite des Außenrohrs.

Vorzugsweise umfasst das Verfahren ein Anbringen zumindest eines Verstärkungsmittels an einer Innenseite des Außenrohrs und ein Aufbringen eines thermischen Isoliermaterials an einer Außenseite des Innenrohrs.

Das Verfahren umfasst, vorzugsweise nach dem Aufbringen und dem Anbringen, ein Anordnen des Innenrohrs in dem Außenrohr koaxial zu einer gemeinsamen Längsachse mit einem Abstand radial zur Längsachse zwischen dem Innenrohr und dem Außenrohr.

Das Anordnen umfasst vorzugsweise ein Verpressen des Isoliermaterials zwischen dem Verstärkungsmittel und dem Innenrohr oder dem Außenrohr zur mechanischen Fixierung von Isoliermaterial, Innenrohr und Außenrohr aneinander.

Eine Isoliermaterialdicke des Isoliermaterials radial zur Längsachse entspricht vorzugsweise vor dem Verpressen dem Abstand. Dadurch wird sichergestellt, dass ein Zwischenraum zwischen dem Innenrohr und dem Außenrohr gleichmäßig und vollständig von dem Isoliermaterial ausgefüllt wird.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen schematischen Längsschnitt eines erfindungsgemäßen Verbindungsrohrs.
Figur 2 zeigt einen schematischen Längsschnitt eines erfindungsgemäßen Verbindungsrohrs.
Figur 3 zeigt einen schematischen Querschnitt des Verbindungsrohrs aus Figur 2.

### Fig.1

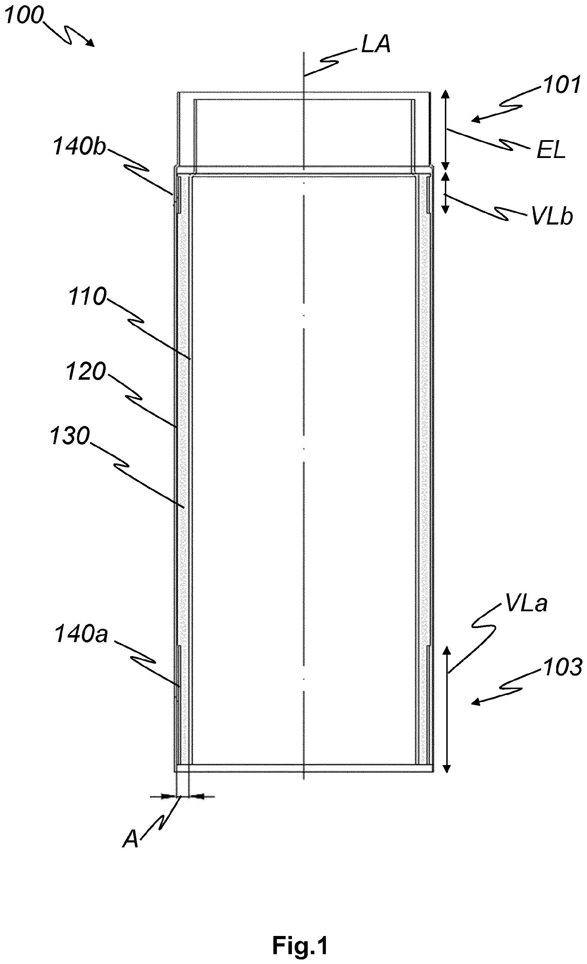

Figur 1 zeigt einen schematischen Längsschnitt entlang einer Längsachse LA eines erfindungsgemäßen Verbindungsrohrs 100. Das Verbindungsrohr 100 umfasst ein koaxial zu einer Längsachse LA angeordnetes, beispielsweise hohlzylinderförmiges und gerades, Außenrohr 120, ein koaxial zu der Längsachse LA in dem Außenrohr 120 mit einem Abstand A radial zur Längsachse LA von beispielsweise 8,8 mm von dem Außenrohr 120 angeordnetes Innenrohr 110 zur Durchleitung von Rauch und ein zwischen dem Innenrohr 110 und dem Außenrohr 120 angeordnetes Isoliermittel 130, beispielsweise aus Keramikpapier, zur mechanischen Verbindung des Innenrohrs 110 mit dem Außenrohr 120 und thermischen Isolierung des Innenrohrs 110 von dem Außenrohr 120.

In einem männlichen Endabschnitt 101 des Verbindungsrohrs 110 entlang der Längsachse LA ist kein Isoliermittel 130 angeordnet, und das Verbindungsrohr umfasst 100 einen dem männlichen Endabschnitt 101 entlang der Längsachse LA gegenüberliegenden weiblichen Endabschnitt 102 zur Aufnahme des männlichen Endabschnitts 101 eines gleichartigen Verbindungsrohrs 100 zur rauchdichten Verbindung der beiden Verbindungsrohre 100.

Zwischen dem Innenrohr 110 und dem Außenrohr 120 und an dem Außenrohr 120 ist zumindest ein Verstärkungsmittel 140 zur Verstärkung des Außenrohrs 120 radial zur Längsachse LA angebracht, wobei das Isoliermittel 130 zwischen dem Verstärkungsmittel 140 und dem Innenrohr 110 zur mechanischen Fixierung von Isoliermaterial 130, Innenrohr 110 und Außenrohr 120 aneinander verpresst ist.

Im dargestellten Beispiel ist ein erstes Verstärkungsmittel 140a in dem weiblichen Endabschnitt 103 angeordnet und ein zweites Verstärkungsmittel 140b an den männlichen Endabschnitt 101 angrenzend angeordnet.

Die Verstärkungsmittel 140a, 140b sind beispielsweise 140 hohlzylinderförmig und koaxial zu der Längsachse LA angeordnet.

Die Verstärkungsmittel 140a, 140b sind beispielsweise mit dem Außenrohr 120 verschweißt.

Das erste Verstärkungsmittel 140a hat beispielsweise entlang der Längsachse LA eine erste Verstärkungsmittellänge VLa, die 160 % einer Endabschnittslänge EL des männlichen Endabschnitts 101 entlang der Längsachse LA beträgt. Das zweite Verstärkungsmittel 140b hat beispielsweise entlang der Längsachse LA eine zweite Verstärkungsmittellänge VLb, die 60 % einer Endabschnittslänge EL des männlichen Endabschnitts 101 entlang der Längsachse LA beträgt.

Beispielsweise kann die erste Verstärkungsmittellänge VLa 80 mm, die zweite Verstärkungsmittellänge VLb 30 mm und die Endabschnittslänge EL 50 mm betragen.

Vorzugsweise ist ein Zwischenraum zwischen dem Innenrohr 110 und dem Außenrohr 120 außerhalb des männlichen Endabschnitts 101 von dem Isoliermaterial 130 ausgefüllt.

Das Innenrohr 110, das Außenrohr 120 und das Verstärkungsmittel 140 bestehen beispielsweise aus Stahl, insbesondere aus Edelstahl.

### Fig.2

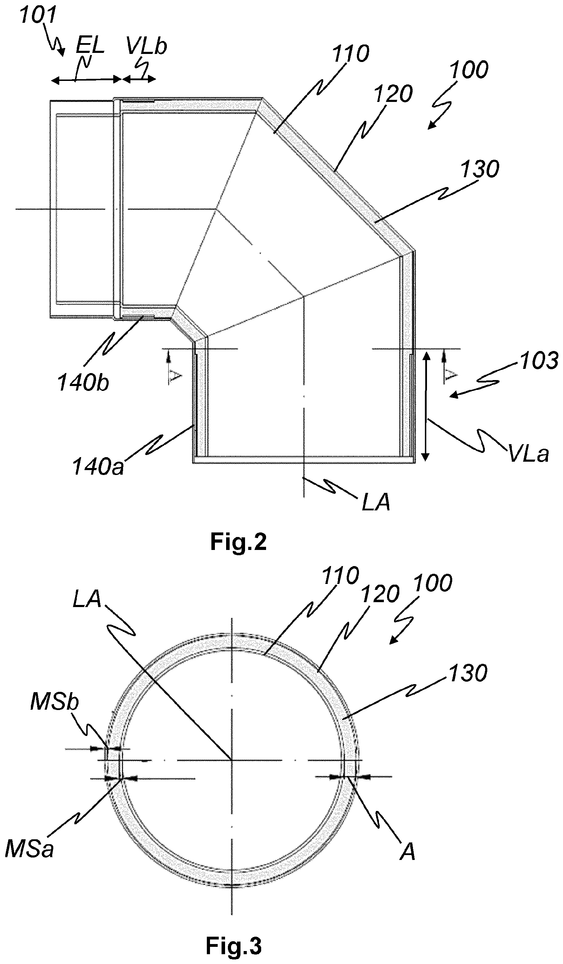

Figur 2 zeigt einen schematischen Längsschnitt entlang einer Längsachse LA eines erfindungsgemäßen Verbindungsrohrs 100. Das weitere Verbindungsrohr 100 unterscheidet sich von dem in Figur 1 dargestellten Verbindungsrohr 100 darin, dass es nicht gerade ist, sondern geknickt, beispielsweise mit zwei Knicken um einen Winkel von je 45°.

### Fig.3

Figur 3 zeigt einen schematischen Querschnitt des Verbindungsrohrs 100 aus Figur 2 entlang der Schnittebene A-A. In dem Querschnitt sind eine Materialstärke MSa des Innenrohrs 110 von beispielsweise 2 mm und eine Materialstärke MSb des Außenrohrs 120 von beispielsweise 1,2 mm markiert.

## Patentansprüche

1. Verbindungsrohr (100) für eine Verbindungsleitung zur Durchleitung von Rauch von einer Feuerstätte in einen Schornstein, wobei das Verbindungsrohr (100)
a) ein koaxial zu einer Längsachse (LA) angeordnetes Außenrohr (120),
b) ein koaxial zu der Längsachse (LA) in dem Außenrohr (120) mit einem Abstand (A) radial zur Längsachse (LA) von dem Außenrohr (120) angeordnetes Innenrohr (110) zur Durchleitung des Rauchs und
c) ein zwischen dem Innenrohr (110) und dem Außenrohr (120) angeordnetes Isoliermittel (130) zur mechanischen Verbindung des Innenrohrs (110) mit dem Außenrohr (120) und thermischen Isolierung des Innenrohrs (110) von dem Außenrohr (120) umfasst,
d) wobei in einem männlichen Endabschnitt (101) des Verbindungsrohrs (110) entlang der Längsachse (LA) kein Isoliermittel (130) angeordnet ist, und
e) wobei das Verbindungsrohr (100) einen dem männlichen Endabschnitt (101) entlang der Längsachse (LA) gegenüberliegenden weiblichen Endabschnitt (103) zur Aufnahme des männlichen Endabschnitts (101) eines gleichartigen Verbindungsrohrs (100) zur rauchdichten Verbindung der beiden Verbindungsrohre (100) umfasst, und
f) wobei ein Außendurchmesser des Innenrohrs (110) und des Außenrohrs (120) in dem männlichen Endabschnitt (101) einem Innendurchmesser des jeweiligen Rohrs (110, 120) in dem weiblichen Endabschnitt (103) entspricht,
g) wobei das Verbindungsrohr zumindest ein zwischen dem Innenrohr (110) und dem Außenrohr (120) und an dem Innenrohr (110) oder an dem Außenrohr (120) angebrachtes Verstärkungsmittel (140) zur Verstärkung des Innenrohrs (110) oder des Außenrohrs (120) radial zur Längsachse (LA) aufweist,
h) wobei das Isoliermittel (130) zwischen dem Verstärkungsmittel (140) und dem Außenrohr (120) oder dem Innenrohr (110) zur mechanischen Fixierung von Isoliermaterial (130), Innenrohr (110) und Außenrohr (120) aneinander verpresst ist.

2. Verbindungsrohr (100) nach Anspruch 1,
**dadurch gekennzeichnet, dass**
das Verstärkungsmittel (140) an dem Außenrohr (120) angebracht ist, wobei das Isoliermittel (130) zwischen dem Verstärkungsmittel (140) und dem Innenrohr (110) zur mechanischen Fixierung von Isoliermaterial (130), Innenrohr (110) und Außenrohr (120) aneinander verpresst ist.

3. Verbindungsrohr (100) nach Anspruch 1 oder 2,
**dadurch gekennzeichnet, dass**
das zumindest eine Verstärkungsmittel (140) in dem weiblichen Endabschnitt (103) und/oder an den männlichen Endabschnitt (101) angrenzend angeordnet ist.

4. Verbindungsrohr (100) nach einem der Ansprüche 1 bis 3,
**dadurch gekennzeichnet, dass**
das zumindest eine Verstärkungsmittel (140) um die Längsachse (LA) umlaufend, bevorzugt ringförmig oder hohlzylinderförmig, und koaxial zu der Längsachse (LA) angeordnet ist.

5. Verbindungsrohr (100) nach einem der Ansprüche 1 bis 4,
**dadurch gekennzeichnet, dass**
das zumindest eine Verstärkungsmittel (140) an dem Innenrohr (110) oder an dem Außenrohr (120)
a) stoffschlüssig befestigt, bevorzugt damit verschweißt, und/oder
b) kraftschlüssig befestigt, bevorzugt damit verklemmt, ist.

6. Verbindungsrohr (100) nach einem der Ansprüche 1 bis 5,
**dadurch gekennzeichnet, dass**
das zumindest eine Verstärkungsmittel (140) entlang der Längsachse (LA) eine Verstärkungsmittellänge (VL) hat, wobei die Verstärkungsmittellänge (VL) 50 % bis 200 %, bevorzugt 60 % bis 160 %, einer Endabschnittslänge des männlichen Endabschnitts (101) entlang der Längsachse (LA) beträgt.

7. Verbindungsrohr (100) nach einem der Ansprüche 1 bis 6,
**dadurch gekennzeichnet, dass**
das zumindest eine Verstärkungsmittel (140) radial zur Längsachse (LA) eine Verstärkungsmitteldicke hat, wobei die Verstärkungsmitteldicke 1 % bis 20 %, bevorzugt 5 % bis 15 %, des Abstands (A) zwischen dem Innenrohr (110) und dem Außenrohr (120) beträgt.

8. Verbindungsrohr (100) nach einem der Ansprüche 1 bis 7,
**dadurch gekennzeichnet, dass**
der Abstand (A) zwischen dem Innenrohr (110) und dem Außenrohr (120)
a) über eine gesamte Außenrohrlänge entlang der Längsachse (LA) konstant ist und/oder
b) 5 mm bis 9 mm, bevorzugt 7 mm bis 9 mm, beträgt.

9. Verbindungsrohr (100) nach einem der Ansprüche 1 bis 8,
**dadurch gekennzeichnet, dass**
ein Zwischenraum (104) zwischen dem Innenrohr (110) und dem Außenrohr (120) außerhalb des männlichen Endabschnitts (101) von dem Isoliermaterial (130) ausgefüllt ist.

10. Verbindungsrohr (100) nach einem der Ansprüche 1 bis 9,
**dadurch gekennzeichnet, dass**
das Isoliermaterial (130) zumindest radial zur Längsachse (LA) um 1 % bis 20 %, bevorzugt 5 % bis 15 %, kompressibel ist und bevorzugt zumindest eine keramische Faser, besonders bevorzugt ein Keramikpapier, umfasst.

11. Verbindungsrohr (100) nach einem der Ansprüche 1 bis 10,
**dadurch gekennzeichnet, dass**
das Innenrohr (110) und/oder das Außenrohr (120) radial zur Längsachse (LA) eine Materialstärke (MS) von 0,5 mm bis 5 mm, bevorzugt von 1 mm bis 3 mm, aufweist.

12. Verbindungsrohr (100) nach einem der Ansprüche 1 bis 11,
**dadurch gekennzeichnet, dass**
das Innenrohr (110), das Außenrohr (120) und/oder das Verstärkungsmittel (140) ein Metall, bevorzugt einen Stahl, besonders bevorzugt einen Edelstahl, umfasst.

13. Verfahren zur Herstellung eines Verbindungsrohrs (100) nach einem der Ansprüche 1 bis 12 für eine Verbindungsleitung zur Durchleitung von Rauch von einer Feuerstätte in einen Schornstein,
**gekennzeichnet durch folgende Schritte**
a) Anbringen zumindest eines Verstärkungsmittels (140) an einer Außenseite eines Innenrohrs (110) oder an einer Innenseite eines Außenrohrs (120) für das Verbindungsrohr (100),
b) Aufbringen eines thermischen Isoliermaterials (130) an der Außenseite des Innenrohrs (110) oder an der Innenseite des Außenrohrs (120) und
c) Anordnen des Innenrohrs (110) in dem Außenrohr (120) koaxial zu einer gemeinsamen Längsachse (LA) mit einem Abstand (A) radial zur Längsachse (LA) zwischen dem Innenrohr (110) und dem Außenrohr (120),
d) wobei das Anordnen ein Verpressen des Isoliermaterials (130) zwischen dem Verstärkungsmittel (140) und dem Innenrohr (120) oder dem Außenrohr (130) zur mechanischen Fixierung von Isoliermaterial (130), Innenrohr (110) und Außenrohr (120) aneinander umfasst.

14. Verfahren (200) nach Anspruch 13,
**dadurch gekennzeichnet, dass**
eine Isoliermaterialdicke des Isoliermaterials (130) radial zur Längsachse (LA) vor dem Verpressen (231) dem Abstand (A) entspricht.

## Claims

1. Connecting tube (100) for a connecting line for the passage of smoke from a fireplace into a chimney, the connecting tube (100) comprising
a) an outer tube (120) arranged coaxially to a longitudinal axis (LA),
b) an inner pipe (110) arranged coaxially to the longitudinal axis (LA) in the outer pipe (120) at a distance (A) radially to the longitudinal axis (LA) from the outer pipe (120) for the passage of the smoke and
c) an insulating means (130) arranged between the inner pipe (110) and the outer pipe (120) for the mechanical connection of the inner pipe (110) to the outer pipe (120) and thermal insulation of the inner pipe (110) from the outer pipe (120),
d) no insulating means (130) being arranged in a male end section (101) of the connecting tube (100) along the longitudinal axis (LA), and
e) the connecting tube (100) having a female end portion (103) opposite the male end portion (101) along the longitudinal axis (LA) for receiving the male end portion (101) of a similar connecting tube (100) for the smoke-tight connection of the two connecting tubes (100), and
f) wherein an outer diameter of the inner tube (110) and the outer tube (120) in the male end section (101) corresponds to an inner diameter of the respective tube (110, 120) in the female end section (103),
**characterized by**
g) at least one reinforcement means (140) attached between the inner pipe (110) and the outer pipe (120) and on the inner pipe (110) or on the outer pipe (120) for reinforcing the inner pipe (110) or the outer pipe (120) radially to the longitudinal axis (LA),
h) the insulating means (130) being compressed between the reinforcing means (140) and the outer tube (120) or the inner tube (110) for mechanical fixing of the insulating material (130), inner tube (110) and outer tube (120) to one another.

2. Connecting tube (100) according to claim 1,
**characterized in that**
the reinforcing means (140) is attached to the outer tube (120), the insulating means (130) being compressed between the reinforcing means (140) and the inner tube (110) for the mechanical fixing of the insulating material (130), inner tube (110) and outer tube (120) to one another.

3. Connecting tube (100) according to claim 1 or 2,
**characterized in that**
the at least one reinforcement means (140) is arranged in the female end section (103) and / or adjacent to the male end section (101).

4. Connecting tube (100) according to one of claims 1 to 3,
**characterized in that**
the at least one reinforcement means (140) is arranged around the longitudinal axis (LA) and coaxially to the longitudinal axis (LA), preferably being ring-shaped or hollow-cylindrically shaped.

5. Connecting tube (100) according to one of claims 1 to 4,
**characterized in that**
the at least one reinforcement means (140) is attached to the inner pipe (110) or to the outer pipe (120)
a) by positive bonding, preferably by welding, and / or
b) by force fitting, preferably by clamping.

6. Connecting tube (100) according to one of claims 1 to 5,
**characterized in that**
the at least one reinforcement means (140) has a reinforcement means length (VL) along the longitudinal axis (LA), the reinforcement means length (VL) amounting to 50 % to 200 %, preferably 60 % to 160 %, of an end section length of the male end section (101) along the longitudinal axis (LA).

7. Connecting tube (100) according to one of claims 1 to 6,
**characterized in that**
the at least one reinforcement means (140) has a reinforcement means thickness radially to the longitudinal axis (LA), the reinforcement means thickness amounting to 1 % to 20 %, preferably 5 % to 15 %, of the distance (A) between the inner tube (110) and the outer tube (120).

8. Connecting tube (100) according to one of claims 1 to 7,
**characterized in that**
the distance (A) between the inner tube (110) and the outer tube (120)
a) is constant over an entire length of the outer tube along the longitudinal axis (LA) and / or
b) amounts to 5 mm to 9 mm, preferably 7 mm to 9 mm.

9. Connecting tube (100) according to one of claims 1 to 8,
**characterized in that**
an intermediate space (104) between the inner tube (110) and the outer tube (120) is filled by the insulating material (130) outside the male end section (101).

10. Connecting tube (100) according to one of claims 1 to 9,
**characterized in that**
the insulating material (130) is compressible at least radially to the longitudinal axis (LA) by 1 % to 20 %, preferably by 5 % to 15 %, and preferably comprises at least one ceramic fiber, particularly preferably a ceramic paper.

11. Connecting tube (100) according to one of claims 1 to 10,
**characterized in that**
the inner tube (110) and / or the outer tube (120) has a material thickness (MS) from 0,5 mm to 5 mm, preferably from 1 mm to 3 mm, radially to the longitudinal axis (LA).

12. Connecting tube (100) according to one of claims 1 to 11,
**characterized in that**
the inner tube (110), the outer tube (120) and / or the reinforcing means (140) comprises a metal, preferably a steel, particularly preferably a stainless steel.

13. Method for manufacturing a connecting tube (100) according to one of claims 1 to 12 for a connecting line for the passage of smoke from a fireplace into a chimney, **characterized by** the following steps
a) attaching at least one reinforcement means (140) to an outer side of an inner tube (110) or to an inner side of an outer tube (120) for the connecting tube (100),
b) applying a thermal insulating material (130) to the outer side of the inner tube (110) or to the inner side of the outer tube (120) and
c) arranging the inner tube (110) in the outer tube (120) coaxially to a common longitudinal axis (LA) with a distance (A) radial to the longitudinal axis (LA) between the inner tube (110) and the outer tube (120),
d) wherein the arranging comprises compressing the insulating material (130) between the reinforcement means (140) and the inner tube (120) or the outer tube (130) for mechanical fixing of the insulating material (130), inner tube (110) and outer tube (120) to one another.

14. Method (200) according to claim 13,
**characterized in that**
an insulating material thickness of the insulating material (130) radially to the longitudinal axis (LA) before pressing (231) corresponds to the distance (A).

## Revendications

1. Tuyau de raccordement (100) pour une conduite de raccordement pour le passage de la fumée d'un foyer dans une cheminée, le tuyau de raccordement (100) comprenant
a) un tuyau extérieur (120) disposé coaxialement à un axe longitudinal (LA),
b) un tuyau intérieur (110) disposé coaxialement à l'axe longitudinal (LA) dans le tuyau extérieur (120) à une distance (A) radialement à l'axe longitudinal (LA) du tuyau extérieur (120) pour le passage de la fumée et
c) un moyen isolant (130) disposé entre le tuyau intérieur (110) et le tuyau extérieur (120) pour le raccordement mécanique du tuyau intérieur (110) au tuyau extérieur (120) et l'isolation thermique du tuyau intérieur (110) du tuyau extérieur (120),
d) aucun moyen isolant (130) n'étant agencé dans une section d'extrémité mâle (101) du tuyau de raccordement (100) le long de l'axe longitudinal (LA), et
e) le tuyau de raccordement (100) ayant une section d'extrémité femelle (103) opposée à la section d'extrémité mâle (101) le long de l'axe longitudinal (LA) pour recevoir la section d'extrémité mâle (101) d'un tuyau de raccordement similaire (100) pour le connexion étanche à la fumée des deux tuyaux de raccordement (100), et
f) un diamètre extérieur du tuyau intérieur (110) et du tuyau extérieur (120) dans la section d'extrémité mâle (101) correspondant à un diamètre intérieur du tuyau respectif (110, 120) dans la section d'extrémité femelle (103),
**caractérisé par**
g) au moins un moyen de renfort (140) fixé entre le tuyau intérieur (110) et le tuyau extérieur (120) et au tuyau intérieur (110) ou au tuyau extérieur (120) pour renforcer le tuyau intérieur (110) ou le tuyau extérieur (120) radialement par rapport à l'axe longitudinal (LA),
h) le moyen isolant (130) étant comprimé entre le moyen de renfort (140) et le tuyau extérieur (120) ou le tuyau intérieur (110) pour la fixation mécanique du matériau isolant (130), du tuyau intérieur (110) et du tuyau extérieur (120) les uns aux autres.

2. Tuyau de raccordement (100) selon la revendication 1,
**caractérisé en ce que**
le moyen de renfort (140) est fixé au tuyau extérieur (120), le moyen isolant (130) étant comprimé entre le moyen de renfort (140) et le tuyau intérieur (110) pour la fixation mécanique du matériau isolant (130), du tuyau intérieur (110) et du tuyau extérieur (120) les uns aux autres.

3. Tuyau de raccordement (100) selon la revendication 1 ou 2,
**caractérisé en ce que**
l'au moins un moyen de renfort (140) est disposé dans la section d'extrémité femelle (103) et / ou adjacent à la section d'extrémité mâle (101).

4. Tuyau de raccordement (100) selon l'une des revendications 1 à 3,
**caractérisé en ce que**
l'au moins un moyen de renfort (140) étant disposé autour de l'axe longitudinal (LA) et coaxialement à l'axe longitudinal (LA), de préférence en forme d'anneau ou de cylindre creux.

5. Tuyau de raccordement (100) selon l'une des revendications 1 à 4,
**caractérisé en ce que**
l'au moins un moyen de renfort (140) est fixé au tuyau intérieur (110) ou au tuyau extérieur (120)
a) par liaison positive, de préférence par soudage, et / ou
b) de manière non positive, de préférence serré avec celui-ci.

6. Tuyau de raccordement (100) selon l'une des revendications 1 à 5,
**caractérisé en ce que**
l'au moins un moyen de renfort (140) a une longueur de moyen de renfort (VL) le long de l'axe longitudinal (LA), la longueur de moyen de renfort (VL) étant 50 % à 200 %, de préférence 60 % à 160 %, d'une longueur de section d'extrémité de la section d'extrémité mâle (101) le long de l'axe longitudinal (LA).

7. Tuyau de raccordement (100) selon l'une des revendications 1 à 6,
**caractérisé en ce que**
l'au moins un moyen de renfort (140) a une épaisseur d'agent de renfort radialement à l'axe longitudinal (LA), l'épaisseur d'agent de renfort étant 1 % à 20 %, de préférence 5 % à 15 %, de la distance (A) entre le tuyau intérieur (110) et le tuyau extérieur (120).

8. Tuyau de raccordement (100) selon l'une des revendications 1 à 7,
**caractérisé en ce que**
la distance (A) entre le tuyau intérieur (110) et le tuyau extérieur (120)
a) est constante sur toute la longueur du tuyau extérieur le long de l'axe longitudinal (LA) et / ou
b) est de 5 mm à 9 mm, de préférence de 7 mm à 9 mm.

9. Tuyau de raccordement (100) selon l'une des revendications 1 à 8,
**caractérisé en ce qu'**
un espace intermédiaire (104) entre le tuyau intérieur (110) et le tuyau extérieur (120) est rempli par le moyen isolant (130) en dehors de la section d'extrémité mâle (101).

10. Tuyau de raccordement (100) selon l'une des revendications 1 à 9,
**caractérisé en ce que**
le moyen isolant (130) est compressible au moins radialement à l'axe longitudinal (LA) de 1 % à 20 %, de préférence de 5 % à 15 %, et comprend de préférence au moins une fibre céramique, de manière particulièrement préférée un papier céramique.

11. Tuyau de raccordement (100) selon l'une des revendications 1 à 10,
**caractérisé en ce que**
le tuyau intérieur (110) et / ou le tuyau extérieur (120) a une épaisseur de matériau (MS) de 0,5 mm à 5 mm, de préférence de 1 mm à 3 mm, radialement à l'axe longitudinal (LA).

12. Tuyau de raccordement (100) selon l'une des revendications 1 à 11,
**caractérisé en ce que**
le tuyau intérieur (110), le tuyau extérieur (120) et / ou le moyen de renfort (140) comprend un métal, de préférence un acier, de manière particulièrement préférée un acier inoxydable.

13. Procédé de fabrication d'un tuyau de raccordement (100) selon l'une des
revendications 1 à 12 pour une conduite de raccordement pour le passage de la fumée d'un foyer dans une cheminée,
**caractérisé par** les étapes suivantes
a) fixer au moins un moyen de renfort (140) à un une face extérieure d'un tuyau intérieur (110) ou à une face intérieure d'un tuyau extérieur (120) pour le tuyau de liaison (100),
b) appliquer un moyen isolant thermique (130) à la face extérieure du tuyau intérieur (110) ou à la face intérieure du tuyau extérieur (120) et
c) agencer le tuyau intérieur (110) dans le tuyau extérieur (120) coaxialement à un axe longitudinal commun (LA) avec une distance (A) radiale à l'axe longitudinal (LA) entre le tuyau intérieur (110) et le tuyau extérieur (120),
d) l'agencement comprenant la compression du matériau isolant (130) entre le moyen de renfort (140) et le tuyau intérieur (120) ou le tuyau extérieur (130) pour la fixation mécanique du matériau isolant (130), du tuyau intérieur (110) et du tuyau extérieur (120) les uns aux autres.

14. Procédé (200) selon la revendication 13,
**caractérisé en ce que**
une épaisseur de moyen isolant du moyen isolant (130) radialement à l'axe longitudinal (LA) avant la compression correspond à la distance (A).
